# NEUE EUROPÄISCHE PATENTSCHRIFT

(11) **EP 2 010 340 B2**
(45) Veröffentlichungstag und Bekanntmachung des Hinweises auf die Entscheidung über den Einspruch: **07.08.2019**
(45) Hinweis auf die Patenterteilung: 16.01.2013
(21) Anmeldenummer: 07728263.0
(22) Anmeldetag: 18.04.2007
(51) Int. Cl.: B60B 3/02, B21D 53/30

(54) **VERFAHREN ZUR HERSTELLUNG EINER LUFTREIFENFELGE**
METHOD FOR PRODUCING A PNEUMATIC TYRE RIM
PROCEDE DE FABRICATION D'UNE JANTE POUR PNEUMATIQUE

(30) Priorität: 21.04.2006 DE 102006019159; 03.05.2006 DE 102006020760; 12.05.2006 DE 102006022726
(43) Veröffentlichungstag der Anmeldung: 07.01.2009
(73) Patentinhaber: WF Maschinenbau- und Blechformtechnik GmbH & Co. KG, 48324 Sendenhorst (DE)
(72) Erfinder: FRIESE, Udo, 59227 Ahlen (DE); OHLSCHER, Heiko, 48324 Sendenhorst (DE)
(74) Vertreter: Dantz, Jan Henning
(86) Internationale Anmeldenummer: PCT/EP2007/053801
(87) Internationale Veröffentlichungsnummer: WO 2007/122166

(56) Entgegenhaltungen:
- EP-A- 0 093 893
- EP-A- 0 205 867
- WO-A2-2005/065049
- DE-A1- 3 239 675
- DE-A1- 10 029 005
- DE-A1- 10 108 497
- DE-A1- 19 602 298
- DE-C1- 4 444 526
- JP-A- 2002 307 110
- DIERIG, H. ET AL: In: LEICO Gmbh & Co. Werkzeugmaschinebau: "Drücken und Drückwalzen von Rädern", 31 October 1996 (1996-10-31), Ahlen

## Beschreibung

Die Erfindung betrifft ein Verfahren zur Herstellung einer Luftreifenfelge gemäß dem Oberbegriff des Anspruchs 1.

Aus vielerlei Gründen ist die Herstellung einer Luftreifenfelge aus einem einstückigen Blech, vornehmlich einer Ronde, vorteilhaft. Gegenüber einer zweiteiligen Luftreifenfelge, bei der die Felgenschüssel und das Felgenbett als separate Teile hergestellt und beispielsweise durch Verschweißen oder Verschrauben miteinander verbunden werden, stellt die einteilige Ausbildung einen wesentlichen wirtschaftlichen Vorteil dar, da der Fertigungsablauf rationeller zu gestalten ist.

Darüber hinaus weisen einteilige Luftreifenfelgen fertigungsbedingt geringere Unwuchten auf, wodurch sich entsprechende Maßnahmen zur Eliminierung dieser Unwuchten erübrigen, andererseits hochwertige Luftreifenfelgen in ihrem Drehverhalten optimiert sind.

Allerdings sind diese theoretischen Vorteile in der Praxis bislang nicht zum Tragen gekommen, da die bekannten Verfahren nicht geeignet sind, eine entsprechende Luftreifenfelge herzustellen, zumindest nicht als Serienteil, bei dem eine sehr kurze Fertigungszeit unabdingbar ist.

In der DE 80 28 246 U1 ebenso wie in der DE 32 39 675 A1 ist jeweils ein Verfahren zur Herstellung einer Luftreifenfelge entsprechend dem Gattungsbegriff beschrieben. Zur Herstellung des Felgenbettes wird darin vorgeschlagen, den sich radial erstreckenden Flansch in radialer Richtung zu spalten, so dass zwei zueinander gespreizte Schenkel entstehen, die nachfolgend zum Felgenbett geformt werden. Diese Idee hat auch die gattungsgemaße DE 196 02 298 C2 wieder aufgenommen.

Das Spalten des Flansches mittels einer Spaltrolle, wie sie bei einem solchen Verfahren eingesetzt wird, ist zur Herstellung einer Luftreifenfelge mit den gebräuchlichen Dimensionierungen allerdings nicht geeignet, da die Wanddicke der eingesetzten Metallronde üblicherweise bei 3,8 - 4 mm liegt, was dazu führt, dass zum einen der Punkt, an dem die Spaltrolle in die Kante der Ronde eingreifen soll, nicht zuverlässig getroffen wird und zum anderen eine notwendige Maßgenauigkeit der Dicke der beiden entstehenden Schenkel nicht eingehalten werden kann, da der Flansch frei über ein Spannwerkzeug hinauskragt, das die vorgeformte Felgenschüssel hält.

Darüber hinaus ergeben sich sehr große Probleme beim Führen der Spaltrolle, wie sich bei Versuchen gezeigt hat.

Gerade bei Verwendung einer Stahlronde treten derart große Kräfte beim Spalten auf, dass ein sinnvoller Einsatz der bekannten Verfahren ausgeschlossen ist.

Der Erfindung liegt daher die Aufgabe zugrunde, ein Verfahren der gattungsgemäßen Art so weiterzuentwickeln, dass es mit konstruktiv geringem Aufwand zu realisieren ist und eine hinsichtlich der Maßgenauigkeit reproduzierbare Serienfertigung von Luftreifenfelgen, insbesondere auch aus Stahl, möglich wird.

Diese Aufgabe wird durch ein Verfahren mit den Merkmalen des Anspruchs 1 gelöst.

Wie sich überraschend gezeigt hat, ist durch das neue Verfahren die Herstellung einer Luftreifenfelge möglich, die nicht nur einfach und überaus kostengünstig zu realisieren ist, sondern die darüber hinaus eine für eine Serienfertigung optimale Reproduzierbarkeit erlaubt, bei einer außergewöhnlich hohen Fertigungsgüte.

Dabei macht sich das Verfahren die aus der Herstellung von rotationssymmetrischen Getriebeteilen mittels des Drückverfahrens bekannten Vorteile hinsichtlich der Maßgenauigkeit der herzustellenden Wände, in diesem Fall des Flansches einerseits und des Kranzes andererseits, die im weiteren Verlauf zum Felgenbett geformt werden, zunutze.

Ausgehend von einer Rondendicke, die im wesentlichen die Wandstärke der Felgenschüssel bestimmt, kann durch das Verfahren eine gewichtsoptimierte Luftreifenfelge hergestellt werden, bei der die unterschiedlichen Wandstärken innerhalb des Felgenbettes problemlos berücksichtigt und hergestellt werden können.

Insbesondere besteht die Möglichkeit, nicht nur eine gegenüber der Felgenschüssel unterschiedliche Wandstärke des Flansches und des Kranzes herzustellen, sondern auch unterschiedliche Wandstärken dieser beiden Felgenbettteile und zwar je nach Wunsch, ausschließlich durch entsprechenden Einsatz der Drückrolle.

Während das bekannte, zum Stand der Technik beschriebene Spalten, wie sich bei Gefügeuntersuchungen gezeigt hat, im weitesten Sinne ein Trennen und damit ein Reißen der Materialfasern zur Folge hat, ist das Drücken des Materials ausschließlich im Sinne eines Materialfließens zu sehen, bei dem keine Gefügebeschädigung des Materials eintritt. Im Gegensatz zu einer Spaltrolle ist der beim Drücken zum Einsatz kommende Bereich der Drückrolle nicht scharfkantig, sondern gerundet und zwar mit einem Radius vorzugsweise > 1,5 mm.

Naturgemäß ergibt sich somit eine durchaus bemerkenswerte Festigkeitsverbesserung der Luftreifenfelge, so dass das erfindungsgemäße Verfahren auch zur Herstellung hochwertiger Leichtmetallfelgen eingesetzt werden kann, die vornehmlich bei Fahrzeugen mit hohen Endgeschwindigkeiten zum Einsatz kommen.

Aber auch zur Herstellung von Luftreifenfelgen aus Stahl bietet das neue Verfahren erhebliche Vorteile, insbesondere hinsichtlich einer optimierten Fertigung.

Während bislang üblicherweise die Luftreifenfelgen zweiteilig ausgebildet sind, also bestehend aus der Felgenschüssel und dem aus einem Rohrabschnitt geformten Felgenbett, die beide durch Verschweißen miteinander verbunden sind, ist nun auch in diesem Bereich eine einstückige kostengünstige Herstellung der Luftreifenfelge möglich. Besondere Vorteile ergeben sich dabei naturgemäß aus der einfachen Herstellung, da auf den Fertigungsgang "Schweißen" verzichtet werden kann. Nach einer vorteilhaften Weiterbildung der Erfindung ist vorgesehen, den Flansch um 45° gegenüber der radialen Ausrichtung abzuwinkeln und den Kranz um 90° gegenüber dem Flansch zu drücken, so dass sich der Flansch einerseits und der Kranz andererseits unter gleichem Winkel zur Felgenschüssel erstrecken, bevor beide durch die Formrollen zum Felgenbett konturiert werden.

Eine Vorrichtung zur Durchführung des Verfahrens ist so ausgebildet, dass zum Abwinkeln des Flansches ein mit einer umlaufenden Schräge versehenes Innenfutter vorgesehen ist, wobei die Schräge durch eine vorstehende Kante begrenzt ist.

Dabei kann das Innenfutter Bestandteil eines Spannwerkzeuges sein, mit dem der Bereich der Ronde, der die Felgenschüssel bilden soll oder eine bereits vorgeformte Felgenschüssel eingespannt wird.

In diesem Fall stellt das Innenfutter ein Spannwerkzeug-Unterteil dar, auf dem die Felgenschüssel aufliegt.

Zur Formung der Kranzes mittels einer zustellbaren Drückrolle kann ein Vorsetzer vorgesehen sein, vorzugsweise in Form eines Ringes, der nach dem Abwinkeln des Flansches zugestellt wird und der eine Anlagefläche aufweist, an der entlang der Kranz sich ausbildet, wobei die Länge des Kranzes durch eine Anschlagkante des Vorsetzers begrenzt wird.

Weitere vorteilhafte Ausbildungen der Erfindung sind in den Unteransprüchen gekennzeichnet.

Das erfindungsgemäße Verfahren wird nachfolgend anhand der beigefügten Zeichnungen beschrieben, die unter anderem ein Ausführungsbeispiel einer Vorrichtung zur Durchführung des Verfahrens zeigen.

Es zeigen:
- Figur 1: einen Teilausschnitt einer Vorrichtung in einer geschnittenen Seitenansicht
- Figur 2: einen Teilausschnitt einer nach der Erfindung hergestellten Luftreifenfelge, ebenfalls in einer geschnittenen Seitenansicht.

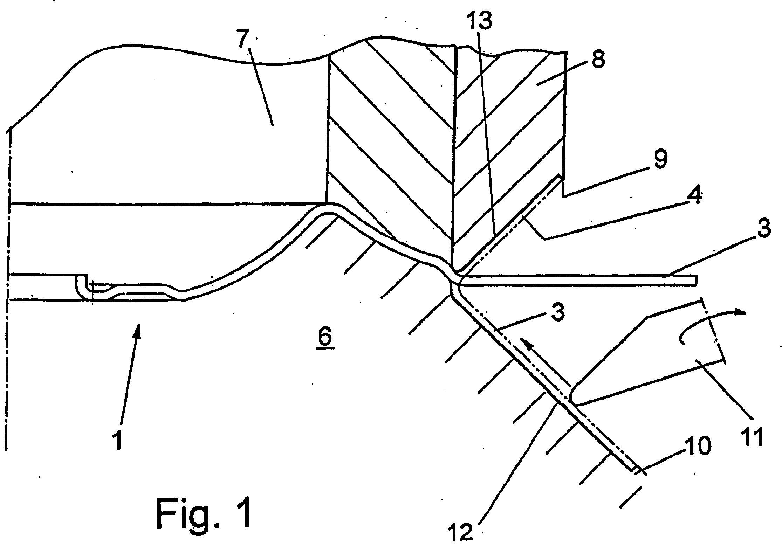

In der Figur 1 ist ein Innenfutter 6 dargestellt, das ein Unterteil einer Spanneinrichtung bildet, dessen Oberteil durch ein Spannfutter 7 dargestellt ist, zwischen denen eine vorgeformte Felgenschüssel 1 eingespannt ist.

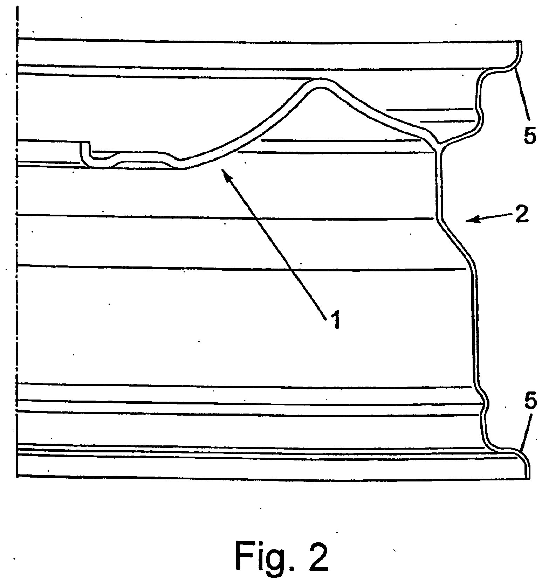

Diese Felgenschüssel 1 ist Bestandteil einer Luftreifenfelge, die des weiteren ein Felgenbett 2 aufweist (Figur 2), das sich einstückig an die Felgenschüssel 1 anschließt.

Die Luftreifenfelge insgesamt ist aus einer Metallronde gebildet, wobei sich in Fortsetzung der Felgenschüssel 1 ein Flansch 3 radial nach außen erstreckt und zunächst frei über die Spanneinrichtung hinausragt. Dies ist in der Figur 1 durch die Volllinie dargestellt.

Zur Herstellung des Felgenbettes 2 wird der Flansch 3 abgewinkelt (weniger als 90° zur Radialen; vorzugsweise weniger als 75° zur Radialen des Felgenbettes bzw. Ausgangsstellung des Flansches in Fig. 1) in eine Stellung, die in der Figur 1 strichpunktiert gezeigt ist, wobei der Flansch 3 an einer umlaufenden Schräge 12 des Innenfutters 6 zur Anlage kommt. Die Schräge 12 ist auf der dem Vorsetzer 8 abgewandten Seite durch eine Kante 10 begrenzt, an der der Flansch 3 mit seiner freien Kante zur Anlage kommt.

In einem weiteren Verfahrensschritt wird mittels einer drehbaren Drückrolle 11 Material des Flansches 3 von außen nach innen hin zu einem ringförmigen Vorsetzer 8 gedrückt, wobei der Vorsetzer 8 eine Anlagefläche 13 aufweist, die in einem rechten Winkel zur Schräge 12 verläuft und an der sich aus dem gedrückten Material des Flansches 3 ein Kranz 4 ausformt bis zu einem Anschlag 9, der die Anlagefläche 13 begrenzt und der die Länge bzw. Höhe des Kranzes 4 bestimmt. Ein Spalten des Flansches findet dabei nicht statt, es wird vielmehr der Flanschbereich dünner, da Material in den Kranz 4 umgeformt wird.

Das Volumen des vom Flansch 3 gedrückten Materials bestimmt zusammen mit seiner Länge die Dicke des Kranzes 4, die unterschiedlich gegenüber der Dicke des Flansches 3 sein kann.

In einem folgenden Verfahrensschritt werden der Flansch 3 und der Kranz 4 zu dem Felgenbett 2 geformt, wobei an beiden Rändern Felgenhörner 5 ausgebildet werden. Die Formung des Felgenbettes 2 erfolgt in an sich bekannter Weise mittels geeigneter, nicht dargestellter Formrollen.

### Bezugszeichenliste

- 1: Felgenschüssel
- 2: Felgenbett
- 3: Flansch
- 4: Kranz
- 5: Felgenhorn
- 6: Innenfutter
- 7: Spannfutter
- 8: Vorsetzer
- 9: Anschlag
- 10: Kante
- 11: Drückrolle
- 12: Schräge
- 13: Anlagefläche

## Patentansprüche

1. Verfahren zur Herstellung einer Luftreifenfelge, bei dem aus einer Metallronde durch Kaltverformen eine Felgenschüssel (1) und ein sich daran anschließendes, umlaufendes Felgenbett (2) gebildet werden,
**dadurch gekennzeichnet, dass**
- zur Bildung des Felgenbettes (2) ein äußerer, bis zur Felgenschüssel reichender, zunächst radial sich erstreckender Flansch (3) der Ronde abgewinkelt wird,
- danach durch Drücken mittels mindestens einer Drückrolle (11) unter Wanddickenreduzierung des Flansches (3) aus dessen Material ein dazu winkliger Kranz (4) geformt wird, wobei zur Bildung des Kranzes (4) ein Teil des Materials des Flansches (3) gegen eine Anlagefläche (13) eines Vorsetzers (8) gedrückt wird, wobei der Flansch (3) und der Kranz (4) nach rechtwinklig zueinander verlaufend gedrückt werden,
- wobei danach der Flansch (3) und der Kranz (4) durch wenigstens eine Formrolle unter Bildung von außenseitigen Felgenhörnern (5) zum Felgenbett (2) geformt werden.

2. Verfahren nach Anspruch 1, **dadurch gekennzeichnet, dass** der Kranz (4) mit einer zu gegenüber dem Flansch (3) unterschiedlichen Wanddicke gedrückt wird.

3. Verfahren nach einem der vorhergehenden Ansprüche, **dadurch gekennzeichnet, dass** der Flansch (3) unter 45° zur Radialen abgewinkelt wird.

## Claims

1. Method for producing a pneumatic tyre rim, in which a rim nave (1) and a peripheral rim base (2) adjoining said rim nave are formed from a round metal blank by cold forming, **characterized in that,**
- to form the rim base (2), an outer flange (3) of the round blank initially extending radially and reaching as far as the rim nave is angled away,
- after which, by pressing by means of at least one pressing roller (11) while reducing the wall thickness of the flange (3), a ring (4) is shaped from the material of said flange at an angle thereto, wherein, to form the ring (4), part of the material of the flange (3) is pressed against an abutting surface (13) of a dolly (8), wherein the flange (3) and the ring (4) are pressed such that they run at right angles to each other,
- wherein thereafter the flange (3) and the ring (4) are shaped by at least one shaping roller to form outer rim horns (5) with respect to the rim base (2).

2. Method according to claim 1, **characterized in that** the ring (4) is pressed with a wall thickness differing from the flange (3) .

3. Method according to one of the preceding claims, **characterized in that** the flange (3) is angled away at 45° to the radial.

## Revendications

1. Procédé servant à fabriquer une jante pour pneumatique, dans lequel une cuve de jante (1) et une embase de jante (2) périphérique se raccordant à celle-ci sont formées à partir d'une tôle métallique ronde par façonnage à froid, **caractérisé en ce que**
- pour la formation de l'embase de jante (2), une collerette (3) extérieure de la tôle ronde parvenant jusqu'à la cuve de jante, s'étendant en premier lieu radialement, est pliée,
- une couronne (4) formant un angle par rapport à la collerette (3) est ensuite façonnée à partir du matériau de celle-ci par l'application d'une pression au moyen d'au moins un galet de pression (11) en réduisant l'épaisseur de paroi de la collerette, une partie du matériau de la collerette (3) étant pressée pour former la couronne (4) contre une surface d'appui (13) d'une pièce intercalaire (8), la collerette (3) et la couronne (4) étant pressées de façon à former un angle droit l'une avec l'autre,
- la collerette (3) et la couronne (4) étant façonnées en direction de l'embase de jante (2) par au moins un galet de façonnage en formant des rebords de jante (5) extérieurs.

2. Procédé selon la revendication 1, **caractérisé en ce que** la couronne (4) est façonnée par pressage à une épaisseur de paroi différente de la collerette (3).

3. Procédé selon l'une quelconque des revendications précédentes, **caractérisé en ce que** la collerette (3) est pliée à 45° par rapport au plan radial.
